# EUROPEAN PATENT APPLICATION

(11) **EP 4 835 642 A1**
(43) Date of publication of application: **04.11.2026**
(21) Application number: 25172953.9
(22) Date of filing: 28.04.2025
(51) Int. Cl.: G06F 8/10, G05B 19/418, G06N 3/045

(54) **METHOD AND SYSTEM FOR GENERATING A GRAPH REPRESENTING A TECHNICAL SYSTEM**

(71) Applicant: Siemens Aktiengesellschaft, 80333 München (DE)
(72) Inventor: Hildebrandt, Marcel, 80805 München (DE); Mogoreanu, Serghei, 81827 München (DE); Ringsquandl, Martin, 83064 Raubling (DE)
(74) Representative: Siemens Patent Attorneys

(57) **Abstract**

The invention relates to generating a graph representing a technical system. A decoder iteratively constructs the graph as a graph token sequence in a structure-preserving graph serialization format, wherein each graph token represents a node of the graph or an aspect of the structure of the graph. In each iteration, the current state of the graph token sequence is used as an input token sequence (ITS). A decoder-only transformer (DOT) composed with a language model head (LMH) receives a textual prompt describing the technical system and the input token sequence (ITS) as input and computes a probability distribution over a token vocabulary (TV), which is a set of possible next tokens (PNT) that could be appended to the input token sequence (ITS). A graph parser (GP) receives partial token sequences as input and builds a partial graph (PG) for each partial token sequence. Each partial token sequence consists of the input token sequence (ITS) followed by one of the possible next tokens (PNT). A discriminator graph neural network (GNN) determines for each partial graph (PG) a probability score indicating how likely the partial graph (PG) is to occur in the real world. Finally, a next token sampler (NTS) receives as input the probability distribution and the probability scores, samples a next graph token from the token vocabulary (TV), and adds the next graph token to the graph token sequence. This multi-modal ensemble decoder outperforms traditional generation approaches as those are limited in their domain-specific guidance. The discriminator graph neural network acts as a "soft constraint" guidance during the next token prediction. The decoder is very data efficient as it does not have to perform all the graph reasoning on the token level. Also, its output is more stable and less prone to hallucinations, compared to large language models as known from the state of the art.

## Description

### Technical Field

This application relates to generating a graph representing a technical system.

### Background Art

Large language models (LLMs) can be used to generate answers to a diverse set of input prompts, e.g. code generation, document summarization, etc. However, when either the input document or the output is meant to represent a technical system such as a complex system from the industrial domain (e.g., an electronic design or a chemical plant), the LLM's inherently sequential next token prediction training objective is not well-suited since many technical systems cannot be efficiently represented as sequences.

Constraint-based approaches have been proposed to enforce adherence to a pre-defined syntax in a final generated text. However, specifying all constraints (in particular, logical constraints that are domain-specific, as opposed to syntax/schema-related constraints) as rules for technical systems with the complexity found in the industrial domain is infeasible.

### Summary of Invention

It is an object of the present invention to identify a problem in the prior art and to find a corresponding technical solution.

The invention is defined in the independent claims. Further advantageous arrangements and embodiments of the invention are set forth in the respective dependent claims.

According to the computer implemented method for generating a graph representing a technical system, wherein nodes of the graph represent technical components and edges of the graph represent functional dependencies between pairs of technical components, the following operations are performed by modules, wherein the modules are hardware modules and/or software modules executed by one or more processors:
- iteratively constructing, by a decoder receiving a textual prompt describing the technical system as input, the graph as a graph token sequence in a structure-preserving graph serialization format, wherein each graph token represents a node of the graph or an aspect of the structure of the graph, wherein each iteration comprises the operations of
   - using the current state of the graph token sequence as an input token sequence,
   - computing, by a decoder-only transformer composed with a language model head and receiving the textual prompt and the input token sequence as input, a probability distribution over a token vocabulary, wherein the token vocabulary is a set of possible next tokens that could be appended to the input token sequence,
   - building, by a graph parser receiving partial token sequences as input, a partial graph for each partial token sequence, wherein each partial token sequence consists of the input token sequence followed by one of the possible next tokens,
   - determining, by a discriminator graph neural network, for each partial graph a probability score indicating how likely the partial graph is to occur in the real world,
   - sampling, by a next token sampler receiving as input the probability distribution and the probability scores, a next graph token from the token vocabulary, and
   - adding the next graph token to the graph token sequence.

The system for generating a graph representing a technical system, wherein nodes of the graph represent technical components and edges of the graph represent functional dependencies between pairs of technical components, comprises the following modules, wherein the modules are hardware modules and/or software modules executed by one or more processors:
- a decoder, configured for
   - receiving a textual prompt describing the technical system as input,
   - iteratively constructing the graph as a graph token sequence in a structure-preserving graph serialization format, wherein each graph token represents a node of the graph or an aspect of the structure of the graph, and
   - in each iteration, using the current state of the graph token sequence as an input token sequence,
- wherein the decoder contains the following modules:
   - a decoder-only transformer composed with a language model head, configured for, in each iteration,
      - receiving the textual prompt and the input token sequence as input, and
      - computing a probability distribution over a token vocabulary,
         wherein the token vocabulary is a set of possible next tokens that could be appended to the input token sequence,
- a graph parser, configured for, in each iteration,
   - receiving partial token sequences as input, and
   - building a partial graph for each partial token sequence,
      wherein each partial token sequence consists of the input token sequence followed by one of the possible next tokens,
- a discriminator graph neural network, configured for, in each iteration, determining for each partial graph a probability score indicating how likely the partial graph is to occur in the real world, and
- a next token sampler, configured for, in each iteration,
   - receiving as input the probability distribution and the probability scores,
   - sampling a next graph token from the token vocabulary, and
   - adding the next graph token to the graph token sequence.

The following advantages and explanations are not necessarily the result of the object of the independent claims. Rather, they may be advantages and explanations that only apply to certain embodiments or variants.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, or any other communication devices that can process data with computer support, for example processors or other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk, a solid-state drive, a flash memory card, or a disk.

The method and system, or at least some of their embodiments, outperform traditional generation approaches as those are limited in their domain-specific guidance. In the state of the art, large language models are not particularly well-suited to reason about graphs.

The method and system, or at least some of their embodiments, advantageously introduce a discriminator graph neural network as a "soft constraint" guidance into the next token prediction.

As a result, method and system, or at least some of their embodiments, are very data-efficient, since the decoder does not have to perform all the graph reasoning on the token level.

The method and system, or at least some of their embodiments, also provide the benefit that the output of the decoder is more stable and less prone to hallucinations, compared to large language models as known from the state of the art.

### Description of Embodiments

In an embodiment of the method and system, the technical system is an electronic circuit or an industrial automation system.

In another embodiment of the method and system, the constructing operation starts with feeding the textual prompt to the decoder-only transformer and the language model head to generate a first graph token and using the first graph token as the input token sequence for the first iteration.

In another embodiment of the method and system, the decoder-only transformer and the language model head form a sequence model that has been trained via self-supervised learning on a next token prediction task, by feeding sequences of tokens representing partial graphs into the sequence model and training it to predict a next token in each sequence. The discriminator graph neural network has been trained via self-supervised learning to distinguish between real-world graphs and artificially disturbed partial graphs, in particular with a contrastive learning training objective.

The computer program product comprises instructions which, when the program is executed by a computer, cause the computer to carry out the method.

The provisioning device stores and/or provides the computer program product.

### Brief Description of the Drawing

The foregoing and other aspects of the present invention are best understood from the following detailed description when read in connection with the accompanying drawings. For the purpose of illustrating the invention, the drawings show embodiments that are presently preferred. However, the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:
- Fig. 1: shows a first embodiment,
- Fig. 2: shows another embodiment,
- Fig. 3: shows two examples of schematic designs SD of technical systems from the industrial domain being represented as graphs G,
- Fig. 4: shows an overall architecture of an embodiment of the system, and
- Fig. 5: shows a flowchart of a possible exemplary embodiment.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described modules can each be hardware modules or software modules. For example, a software module can be a software library; an individual procedure, subroutine, or function; or, depending on the programming paradigm, any other portion of software code that implements the function of the software module. A combination of hardware modules and software modules can occur, in particular, if some of the effects according to the invention are preferably exclusively implemented by special hardware (e.g., a processor in the form of an ASIC or FPGA) and some other part by software.

### Description of Examples

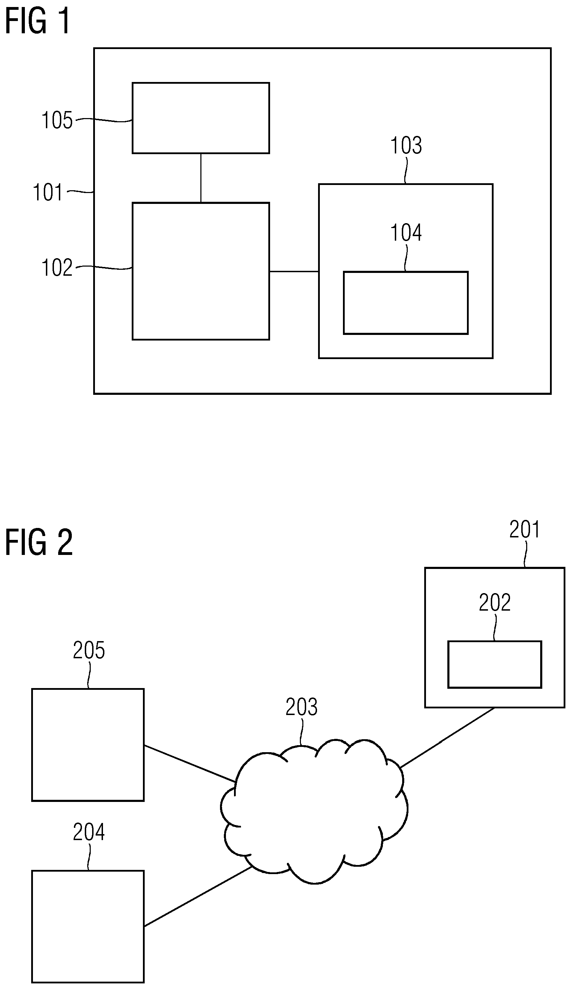

Fig. 1 shows a sample structure for computer-implementation of the invention which comprises:
(101) computer system
(102) processor
(103) memory
(104) computer program (product)
(105) user interface

In this embodiment of the invention the computer program 104 comprises program instructions for carrying out the invention. The computer program 104 is stored in the memory 103 of the computer system 101. The computer system 101 may carry out the invention by executing the program instructions of the computer program 104 by the processor 102. Results of the invention may be presented on the user interface 105. Alternatively, they may be stored in the memory 103 or on another suitable means for storing data.

Fig. 2 shows another sample structure for computer-implementation of the invention which comprises:
(201) provisioning device
(202) computer program (product)
(203) computer network/Internet
(204) computer system
(205) mobile device/smartphone

In this embodiment the provisioning device 201 stores a computer program 202 which comprises program instructions for carrying out the invention. The provisioning device 201 provides the computer program 202 via a computer network/Internet 203. By way of example, a computer system 204 or a mobile device/smartphone 205 may load the computer program 202 and carry out the invention by executing the program instructions of the computer program 202.

In a variation of this embodiment, the provisioning device 201 is a computer-readable storage medium, for example a SD card, that stores the computer program 202 and is connected directly to the computer system 204 or the mobile device/smartphone 205 in order for it to load the computer program 202 and carry out the invention by executing the program instructions of the computer program 202.

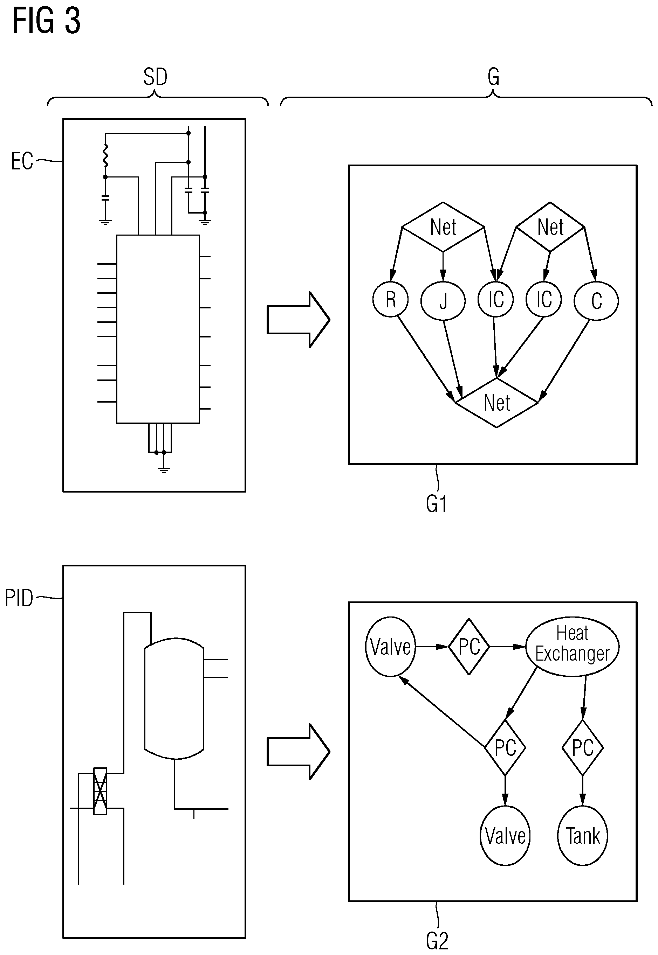

Preferably, the embodiments shown in Figs. 3 to 5 can be implemented with a structure as shown in Fig. 1 or Fig. 2.

In comparison to a sequence, a far more natural representation of technical systems such as complex systems from the industrial domain is a graph with nodes representing technical components and edges representing functional dependencies between pairs of technical components.

Fig. 3 shows two examples of schematic designs SD of technical systems, here complex systems from the industrial domain, being represented as graphs G. A first schematic design SD describing an electronic circuit EC is represented as a first graph G1 where electronic components (resistors, capacitors, ICs, etc.) are logically connected via nets (power, signal). Similarly, a Process and Instrumentation Diagram PID is represented as a second graph G2 which represents a flow of material between equipment (tanks, pumps, valves, etc.) via piping components (PC), which is an example of an industrial automation system.

When using common LLMs to generate industrial designs, input and output both are sequences of text tokens. Due to this sequential nature, such LLMs are not well-suited to reason about functional dependencies in the underlying graph structure.

The embodiments described in the following contain a novel multi-modal ensemble decoder, which integrates a graph parser and a graph neural network to facilitate multi-hop graph reasoning during next token prediction. This approach has the potential to significantly improve the stability and accuracy of complex system designs generated by a (large) language model (less hallucinations, syntax errors, and domain errors).

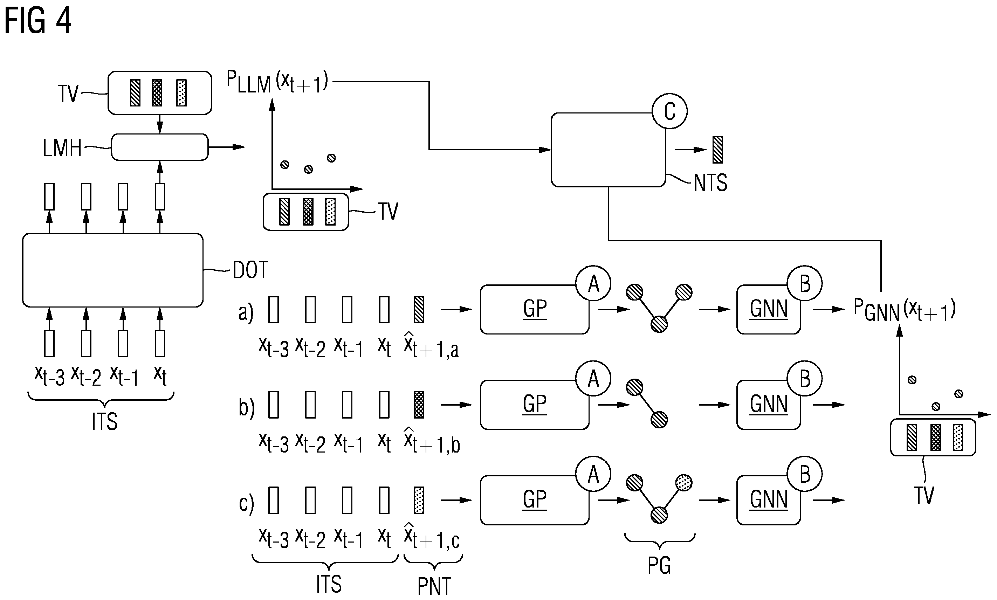

Fig. 4 shows an overall architecture of the multi-modal ensemble decoder, which uses a graph generation method leveraging a language model coupled with a graph neural network GNN. Concretely, based on a sequence representation of a partial graph PG, the embodiment casts the graph generation task as a next token prediction problem. Fig. 4 shows the following main components:
A a graph parser GP, receiving as input a partial sequence of tokens and outputting a partial graph PG,
B a discriminator graph neural network GNN, receiving as input a partial graph PG, and outputting a probability score indicating how likely the partial graph PG is to occur in the real world,
C a next token sampler NTS, receiving as input a token probability from a language model head LMH and probability score from the discriminator graph neural network GNN, and outputting the sampled next token.

The current embodiment relies on structure-preserving graph serializations. A structure-preserving graph serialization can result from converting the graph to a string of tokens, for example by performing a depth-first traversal/depth-first search of the graph.

One common serialization format that can be adapted for the current embodiment is SMILES (Simplified Molecular Input Line Entry System), widely used for representing chemical structures, as known from David Weininger, "SMILES, a chemical language and information system. 1. Introduction to methodology and encoding rules", J. Chem. Inf. Comput. Sci. 1988, 28, 1, 31-36. The entire contents of that document are incorporated herein by reference.

The document "node_link_data - NetworkX", available on the internet at https://networkx.org/documentation/stable/reference/readwrite/generated/networkx.readwrite.jso n_graph.node_link_data.html on 24.04.2025, discloses a software library for reading and writing graphs that can also be used to implement the current embodiment. The described commands are suitable for producing a structure-preserving graph serialization, by converting the graph to a string of tokens, here a JSON representation. The entire contents of that document are incorporated herein by reference.

In another variant of the current embodiment, a structure-preserving graph serialization can be produced as an XML representation.

Each of these alternative structure-preserving graph serialization formats represent not just nodes, but the entire graph structure in textual form.

Using a textual prompt describing a desired technical system, the current embodiment iteratively builds a sequence of graph tokens, drawing candidates from a token vocabulary TV. Each graph token represents a node of the graph or an aspect of the structure of the graph. In each iteration, a partial sequence of graph tokens accumulated up to that iteration forms an input token sequence ITS. The token vocabulary TV is a set of k possible next tokens PNT (i.e., graph nodes) that could be appended to the input token sequence ITS.

The token vocabulary TV can be, for example, a default token vocabulary associated with the decoder-only transformer DOT and/or the language model head LMH, for example, a vocabulary of natural language text. These vocabularies are general enough to represent any text-based graph serialization formats such as SMILES, JSON, or XML.

As illustrated in Fig. 4, the current embodiment processes the input token sequence ITS in parallel, using a decoder-only transformer DOT on the one hand, and a graph neural network GNN on the other hand.

The actual input to the decoder-only transformer DOT starts with the textual prompt (also being a sequence of tokens) followed by the current state of the input token sequence ITS. The depiction in Fig. 4 is incomplete as it only shows the input token sequence ITS as input for the decoder-only transformer DOT. Although the textual prompt is not part of the input token sequence ITS as shown in Fig. 4, it is also fed to the decoder-only transformer DOT to provide context.

According to the current embodiment, the decoder-only transformer DOT processes the textual prompt and the input token sequence ITS directly. The decoder-only transformer DOT is composed with the language model head LMH in order to compute and output a probability distribution (*p₁, p*₂, *... , pₖ*) over the token vocabulary TV.

Parallel to this, the graph parser GP takes the input token sequence ITS (but not the textual prompt) and each possible next token PNT and converts them into a partial graph PG, as shown in Fig. 4. In other words, the current embodiment creates k different partial graphs PG resulting from appending each possible next token PNT to the input token sequence ITS.

Subsequently each partial graph PG is fed into the discriminator graph neural network GNN, which is tuned to distinguish between real-world graphs and artificial graphs. That means, like a discriminator in a GAN setting, the discriminator graph neural network GNN serves as a realism evaluator, ensuring that the generated graph structures are not too dissimilar from observed real-world graphs (and thus, are likely to not violate any of the logical constraints). For each partial graph PG, the discriminator graph neural network GNN outputs a probability score indicating how likely the partial graph PG is to occur in the real world. This leads to a set of probabilities (*q₁, q₂, ... , qₖ*) where each *qᵢ* indicates the probability assigned by the discriminator graph neural network GNN that the input token sequence ITS augmented by the *i - th* possible next token PNT is a real-world, partial graph. Note that each *qᵢ* is a probability but the set of **probabilities** (*q*₁, *q₂,* ... , *qₖ*) is not a probability distribution over the set of possible next tokens PNT.

Subsequently, the probability distribution (*p₁, p*₂, ... , *pₖ*) and the set of probabilities (*q₁, q₂, ... , qₖ*) are fed as sets of vectors into the next token sampler NTS. Similar to an ensemble method, the next token sampler NTS processes for each possible next token PNT the probability output by the language model head LMH and the probability assigned by the discriminator graph neural network GNN, combining these two vectors to form an aggregated probability distribution for the next token. The combined probability distribution is then used to sample the next token, iteratively building the graph.

To initialize processing while the input token sequence ITS is still empty, the decoder-only transformer DOT composed with the language model head LMH processes the textual prompt only to compute a first graph token that is taken as the initial input token sequence ITS.

The training procedure for the overall architecture involves separated, self-supervised learning of the sequence model (formed by the decoder-only transformer DOT and the language model head LMH) on the one hand and the discriminator graph neural network GNN on the other hand. The sequence model is trained on the next token prediction task. This involves feeding sequences of tokens representing partial graphs into the sequence model and training it to predict the next token in the sequence. Meanwhile, the discriminator graph neural network GNN is trained to distinguish between real-world graphs and artificially disturbed partial graphs (e.g., with a contrastive learning training objective).

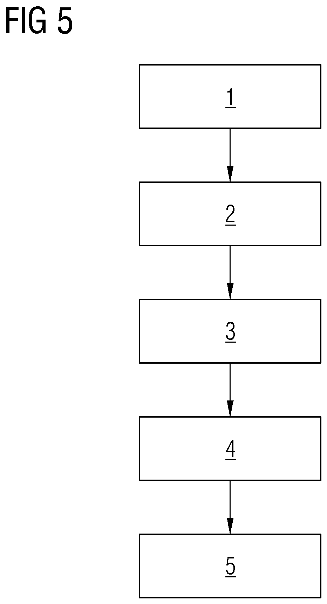

Fig. 5 shows a flowchart of a possible exemplary embodiment for generating a graph representing a technical system, wherein nodes of the graph represent technical components and edges of the graph represent functional dependencies between pairs of technical components, and wherein the following operations are performed by modules, and wherein the modules are hardware modules and/or software modules executed by one or more processors:

A decoder, for example the multi-modal ensemble decoder described above, iteratively constructs the graph as a graph token sequence in a structure-preserving graph serialization format, wherein each graph token represents a node of the graph or an aspect of the structure of the graph.

For each iteration, the current state of the graph token sequence is used as an input token sequence. In each iteration, the following five operations are performed:
In a computing operation 1, a decoder-only transformer composed with a language model head and receiving the input token sequence as input, computes a probability distribution over a token vocabulary. The token vocabulary is a set of possible next tokens that could be appended to the input token sequence.

In a building operation 2, a graph parser receiving partial token sequences as input builds a partial graph for each partial token sequence. Each partial token sequence consists of the input token sequence followed by one of the possible next tokens.

In a determining operation 3, a discriminator graph neural network determines for each partial graph a probability score indicating how likely the partial graph is to occur in the real world.

In a sampling operation 4, a next token sampler receiving as input the probability distribution and the probability scores, samples a next graph token from the token vocabulary.

In an adding operation 5, the next graph token is added to the graph token sequence.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform acts corresponding to the operations of the method described above.

The instructions for implementing processes or methods described herein may be provided on computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the spirit and scope of the invention covered by the claims. The phrase "A, B, and/or C" as an alternative expression may provide that one or more of A, B, and C may be used.

Independent of the grammatical term usage, individuals with male, female, or other gender identities are included within the term.

## Claims

1. A computer implemented method for generating a graph representing a technical system, wherein nodes of the graph represent technical components and edges of the graph represent functional dependencies between pairs of technical components, and wherein the following operations are performed by modules, and wherein the modules are hardware modules and/or software modules executed by one or more processors:
- iteratively constructing, by a decoder receiving a textual prompt describing the technical system as input, the graph as a graph token sequence in a structure-preserving graph serialization format, wherein each graph token represents a node of the graph or an aspect of the structure of the graph, wherein each iteration comprises the operations of
- using the current state of the graph token sequence as an input token sequence (ITS),
- computing (1), by a decoder-only transformer (DOT) composed with a language model head (LMH) and receiving the textual prompt and the input token sequence (ITS) as input, a probability distribution over a token vocabulary (TV), wherein the token vocabulary (TV) is a set of possible next tokens (PNT) that could be appended to the input token sequence (ITS),
- building (2), by a graph parser (GP) receiving partial token sequences as input, a partial graph (PG) for each partial token sequence, wherein each partial token sequence consists of the input token sequence (ITS) followed by one of the possible next tokens (PNT),
- determining (3), by a discriminator graph neural network (GNN), for each partial graph (PG) a probability score indicating how likely the partial graph (PG) is to occur in the real world,
- sampling (4), by a next token sampler (NTS) receiving as input the probability distribution and the probability scores, a next graph token from the token vocabulary (TV), and
- adding (5) the next graph token to the graph token sequence.

2. The method according to claim 1,
- wherein the technical system is an electronic circuit or an industrial automation system.

3. The method according to any of the preceding claims,
- wherein the constructing operation starts with feeding the textual prompt to the decoder-only transformer (DOT) and the language model head (LMH) to generate a first graph token and using the first graph token as the input token sequence (ITS) for the first iteration.

4. The method according to any of the preceding claims,
- wherein the decoder-only transformer (DOT) and the language model head (LMH) form a sequence model that has been trained via self-supervised learning on a next token prediction task, by feeding sequences of tokens representing partial graphs into the sequence model and training it to predict a next token in each sequence,
- wherein the discriminator graph neural network (GNN) has been trained via self-supervised learning to distinguish between real-world graphs and artificially disturbed partial graphs, in particular with a contrastive learning training objective.

5. A system for generating a graph representing a technical system, wherein nodes of the graph represent technical components and edges of the graph represent functional dependencies between pairs of technical components, comprising the following modules, wherein the modules are hardware modules and/or software modules executed by one or more processors:
- a decoder, configured for
- receiving a textual prompt describing the technical system as input,
- iteratively constructing the graph as a graph token sequence in a structure-preserving graph serialization format, wherein each graph token represents a node of the graph or an aspect of the structure of the graph, and
- in each iteration, using the current state of the graph token sequence as an input token sequence (ITS),
- wherein the decoder contains the following modules:
- a decoder-only transformer (DOT) composed with a language model head (LMH), configured for, in each iteration,
- receiving the textual prompt and the input token sequence (ITS) as input, and
- computing a probability distribution over a token vocabulary (TV),
wherein the token vocabulary (TV) is a set of possible next tokens (PNT) that could be appended to the input token sequence (ITS),
- a graph parser (GP), configured for, in each iteration,
- receiving partial token sequences as input, and
- building a partial graph (PG) for each partial token sequence,
wherein each partial token sequence consists of the input token sequence (ITS) followed by one of the possible next tokens (PNT),
- a discriminator graph neural network (GNN), configured for, in each iteration, determining for each partial graph (PG) a probability score indicating how likely the partial graph (PG) is to occur in the real world, and
- a next token sampler (NTS), configured for, in each iteration,
- receiving as input the probability distribution and the probability scores,
- sampling a next graph token from the token vocabulary (TV), and
- adding the next graph token to the graph token sequence.

6. A computer program product comprising instructions which, when the program is executed by a computer, cause the computer to carry out a method according to one of the method claims.

7. A provisioning device for the computer program product according to the preceding claim, wherein the provisioning device stores and/or provides the computer program product.
